# EUROPEAN PATENT SPECIFICATION

(11) **EP 3 153 356 B1**
(45) Date of publication and mention of the grant of the patent: **19.09.2018**
(21) Application number: 14896294.7
(22) Date of filing: 01.07.2014
(51) Int. Cl.: B60R 16/02, B60K 35/00, B60R 21/00, B60R 1/00, G02B 27/01, G06K 9/00, G06K 9/52

(54) **DISPLAY DEVICE FOR VEHICLE AND DISPLAY METHOD FOR VEHICLE**
ANZEIGEVORRICHTUNG FÜR FAHRZEUG UND ANZEIGEVERFAHREN FÜR FAHRZEUG
DISPOSITIF D'AFFICHAGE POUR VÉHICULE ET PROCÉDÉ D'AFFICHAGE POUR VÉHICULE

(43) Date of publication of application: 12.04.2017
(73) Proprietor: NISSAN MOTOR CO., LTD., Yokohama-shi, Kanagawa 221-0023 (JP)
(72) Inventor: KOSAKA, Norio, Atsugi-shi Kanagawa 243-0123 (JP); YAMAMOTO, Tetsuya, Atsugi-shi Kanagawa 243-0123 (JP)
(74) Representative: Osha Liang
(86) International application number: PCT/JP2014/067545
(87) International publication number: WO 2016/002006

(56) References cited:
- EP-A1- 1 785 326
- DE-A1- 19 826 283
- JP-A- 2004 310 489
- JP-A- 2007 087 337
- JP-A- 2008 046 744
- JP-A- 2010 108 264
- JP-A- 2010 108 264

## Description

The present invention relates to a vehicular display apparatus and method for displaying an image on a windshield of a vehicle.

### BACKGROUND ART

Patent Literature 1 discloses a conventional vehicular display apparatus, such as a head-up display, that displays an image on a windshield of a vehicle. The vehicular display apparatus disclosed in Patent Literature 1 displays a target mark on the windshield such that the target mark is superimposed on a preceding vehicle to which attention is to be drawn. Other examples of vehicle driving assist systems are disclosed in Patent Literature 2 to 4.

### CITATION LIST

### PATENT LITERATURE

Patent Literature 1: Japanese Patent Application Publication No. 2005-67514.
Patent Literature 2: Patent document EP 1785326 A1 (disclosing the features of the preamble of claims 1 and 5).
Patent Literature 3: Patent document DE 19826283 A1.
Patent Literature 4: Patent document JP 2008046744.

### SUMMARY OF INVENTION

When displaying the target mark in a highlighted manner, however, the conventional vehicular display apparatus described above performs the highlighted display in the same way regardless of whether the preceding vehicle is situated away from the vehicle or close to the vehicle. This poses a problem in that driver's awareness of an attention target to which attention of the driver needs to be drawn cannot be enhanced even when the attention target approaches the vehicle and accordingly changes its apparent size.

The present invention has been proposed in view of the above circumstances, and aims to provide a vehicular display apparatus and method capable of enhancing the driver's awareness of an attention target according to a change of its apparent size when the attention target approaches a vehicle.

To solve the above problem, a vehicular display apparatus and method according to an aspect of the present invention are defined in appended claims 1 and 5, respectively. Such an apparatus or method detects an attention target to which attention of a driver of the vehicle needs to be drawn, and calculates a distance from the attention target to the vehicle. The vehicular display apparatus and method then performs display control for displaying an attention mark on a windshield in a superimposed manner such that from a point of view of the driver, the attention mark is displayed close to the attention target, the attention mark being displayed to draw the attention of the driver to the attention target, and changes a highlight level for highlighted display of the attention mark according to the distance.

### BRIEF DESCRIPTION OF DRAWINGS

[Fig. 1] Fig. 1 is a block diagram showing the configuration of a vehicular display apparatus according to a first embodiment of the present invention.
[Fig. 2] Fig. 2 is a flowchart illustrating processing procedures of image generation processing performed by the vehicular display apparatus according to the first embodiment of the present invention.
[Fig. 3] Fig. 3 is a diagram illustrating how the vehicular display apparatus according to the first embodiment of the present invention displays an attention mark.
[Fig. 4] Fig. 4 is a diagram illustrating how the vehicular display apparatus according to the first embodiment of the present invention modulates the display of the attention mark.
[Fig. 5] Fig. 5 is a diagram illustrating how the vehicular display apparatus according to the first embodiment of the present invention modulates the display of the attention mark.
[Fig. 6] Fig. 6 is a diagram illustrating how the vehicular display apparatus according to the first embodiment of the present invention modulates the display of the attention mark.
[Fig. 7] Fig. 7 is a diagram illustrating how a vehicular display apparatus according to a second embodiment of the present invention changes the display size of the attention mark.

### DESCRIPTION OF EMBODIMENTS

First and second embodiments of the present invention are described below with reference to the drawings.

### [First Embodiment]

### [Configuration of the Vehicular Display Apparatus]

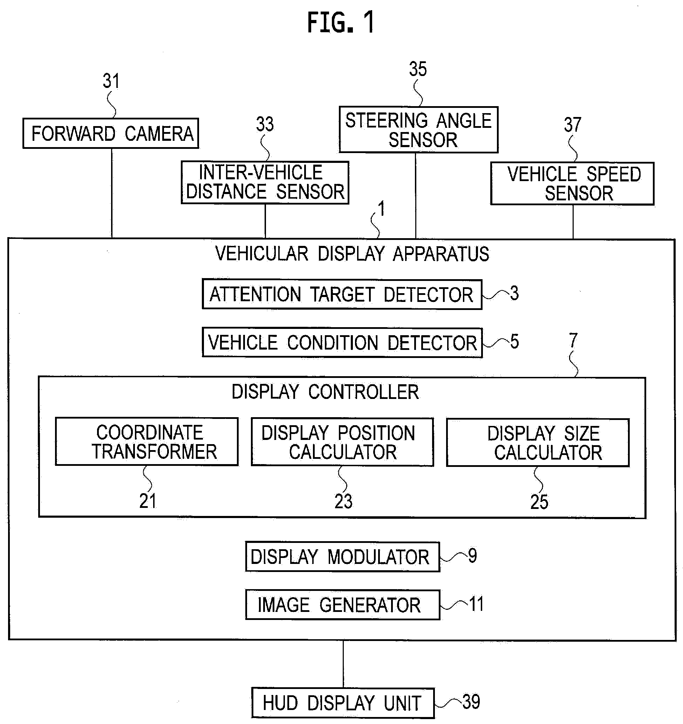

Fig. 1 is a block diagram showing the configuration of a vehicular display apparatus according to the present embodiment. As shown in Fig. 1, a vehicular display apparatus 1 according to the present embodiment includes an attention target detector 3, a vehicle condition detector 5, a display controller 7, a display modulator 9, and an image generator 11. The display controller 7 further includes a coordinate transformer 21, a display position calculator 23, and a display size calculator 25.

Herein, the vehicular display apparatus 1 according to the present embodiment functions as a controller for a head-up display (not shown) that displays an image on a windshield of a vehicle. The head-up display controlled by the vehicular display apparatus 1 includes a projector for projecting an image, a screen and a Fresnel mirror for reflecting the image, and the like. The vehicular display apparatus 1 according to the present embodiment is connected to various sensors installed in the vehicle, and is connected especially to a forward camera 31, an inter-vehicle distance sensor 33, a steering angle sensor 35, and a vehicle speed sensor 37. The vehicular display apparatus 1 is also connected to a HUD display unit 39 of the head-up display, and outputs an image generated by the image generator 11 to the HUD display unit 39 to display the image on the windshield of the vehicle.

The attention target detector 3 analyzes an image acquired from the forward camera 31, and detects an attention target to which attention of a driver of the vehicle needs to be drawn. The attention target thus detected is a pedestrian, a bicycle, a preceding vehicle, a parked/stopped vehicle and an obstacle or the like. If a preceding vehicle is to be detected as the attention target, information from the inter-vehicle distance sensor 33 may be used for the detection. Then, the attention target detector 3 detects the position, relative distance, relative speed, size, and the like of the attention target. If the vehicle has a radar installed therein, these pieces of information may be detected by the radar.

The vehicle condition detector 5 acquires data from the various sensors installed in the vehicle, the data indicating the travelling conditions of the vehicle. For example, the vehicle condition detector 5 acquires the inter-vehicle distance to a preceding vehicle from the inter-vehicle distance sensor 33, the steering angle of the vehicle from the steering angle sensor 35, and the vehicle speed of the vehicle from the vehicle speed sensor 37.

The display controller 7 performs display control for displaying an attention mark on the windshield so that the attention mark may be displayed in a superimposed manner close to a position on the windshield at which the driver sees the attention target. The attention mark is an image displayed to draw attention of the driver to the attention target.

Specifically, the display controller 7 first acquires 3D coordinates representing the position of the attention target from the image captured by the forward camera 31, and transforms the 3D coordinates into 2D coordinates representing a position on the windshield. Then, based on the 2D coordinates, the display controller 7 calculates a display position on the windshield at which the attention mark is displayed. In addition, based on the size of the attention target on the image, the display controller 7 calculates a display size in which the attention mark is displayed on the windshield. The display controller 7 then performs control so that the attention mark may be displayed on the windshield in a superimposed manner at the calculated display position, in the calculated display size. Specific processing is executed by the coordinate transformer 21, the display position calculator 23, and the display size calculator 25 that constitute the display controller 7.

The coordinate transformer 21 performs processing of transforming 3D coordinate data acquired by the forward camera 31 into 2D coordinates on the windshield of the vehicle.

Based on the 2D coordinates of the attention target on the windshield, the display position calculator 23 calculates the display position on the windshield at which the attention mark is displayed. When the attention mark is displayed at this display position, the attention mark is, from a point of view of the driver, displayed in a superimposed manner close to the attention target on the windshield.

Based on the size of the attention target on the image captured by the forward camera 31, the display size calculator 25 calculates the display size in which the attention mark is displayed on the windshield.

The display modulator 9 changes the highlight level for highlighted display of the attention mark according to the relative distance between the vehicle and the attention target. In the present embodiment, the display modulator 9 particularly changes the luminance, spatial frequency, and/or time frequency of the attention mark according to the relative distance.

The image generator 11 generates, based on processing results obtained by the above parts, an image for the head-up display to display on the windshield of the vehicle.

The forward camera 31 is imaging means that captures a scene ahead of the vehicle, and is configured with a solid-state image pickup element such as a CCD or CMOS.

The inter-vehicle distance sensor 33 detects a preceding vehicle travelling ahead of the vehicle using a millimeter-wave radar, a CCD image sensor, an infrared sensor, or the like, and measures the inter-vehicle distance between the vehicle and the preceding vehicle.

The steering angle sensor 35 detects the steering angle of the vehicle from the angle of rotation of the steering wheel.

The vehicle speed sensor 37 detects the vehicle speed of the vehicle from a pulse signal indicative of the number of rotations of an axle.

The HUD display unit 39 is a device for actually projecting an image onto the windshield, and is, for example, the projector constituting the head-up display.

The vehicular display apparatus 1 is configured with general-purpose electronic circuitry and peripherals including a microcomputer, a microprocessor, or a CPU. By executing particular programs, the vehicular display apparatus 1 operates as the attention target detector 3, the vehicle condition detector 5, the display controller 7, the display modulator 9, and the image generator 11 described above.

### [Procedures for Image Generation Processing]

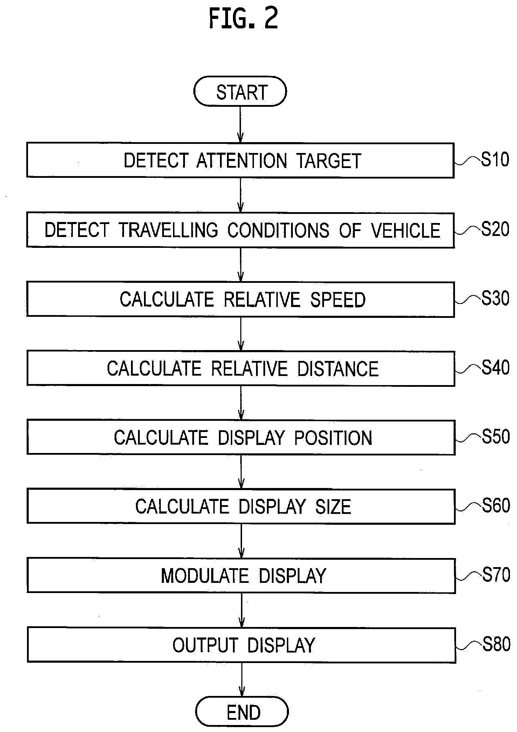

Next, procedures of image generation processing performed by the vehicular display apparatus according to the present embodiment are described with reference to a flowchart in Fig. 2.

As shown in Fig. 2, first in Step S10, the attention target detector 3 analyzes an image acquired from the forward camera 31 and detects an attention target to which attention of the driver of the vehicle needs to be drawn.

In Step S20, the vehicle condition detector 5 acquires data indicating the traveling conditions of the vehicle from the various sensors installed in the vehicle. The vehicle condition detector 5 may particularly acquire the inter-vehicle distance to a preceding vehicle travelling ahead from the inter-vehicle distance sensor 33, the steering angle of the vehicle from the steering angle sensor 35, and the vehicle speed of the vehicle from the vehicle speed sensor 37. The vehicle condition detector 5 may acquire the position of the vehicle from a GPS or the like.

In Step S30, the attention target detector 3 arranges images from the forward camera 31 chronologically, and based on the change in position of the attention target, calculates the relative speed of the attention target with respect to the vehicle. If the vehicle has a radar installed therein, the relative speed may be detected by the radar. In addition, if the attention target is a vehicle travelling ahead, the relative speed may be calculated based on information from the inter-vehicle distance sensor 33.

In Step S40, the attention target detector 3 analyzes the images from the forward camera 31 and thereby calculates the relative distance from the vehicle to the attention target. For this process, the attention target detector 3 obtains the direction to the attention target and specifies the relative position of the attention target with respect to the vehicle. The attention target detector 3 also calculates the size of the attention target based on the size of the attention target on the image. If the vehicle has a radar installed therein, these pieces of information may be detected with the radar. In addition, if the attention target is a vehicle travelling ahead, the relative distance may be calculated based on information from the inter-vehicle distance sensor 33. The attention target detector 3 may correct the relative distance in real time according to the relative speed.

In Step S50, the display controller 7 calculates a display position at which an attention mark is displayed in a superimposed manner close to the attention target. First, the coordinate transformer 21 transforms 3D coordinate data acquired by the forward camera 31 into 2D coordinate data on the windshield of the vehicle. Thereby, the 3D coordinates indicating the position of the attention target are transformed into 2D coordinates indicating a position on the windshield.

Then, based on the 2D coordinates of the attention target on the windshield, the display position calculator 23 calculates a display position on the windshield at which the attention mark is displayed.

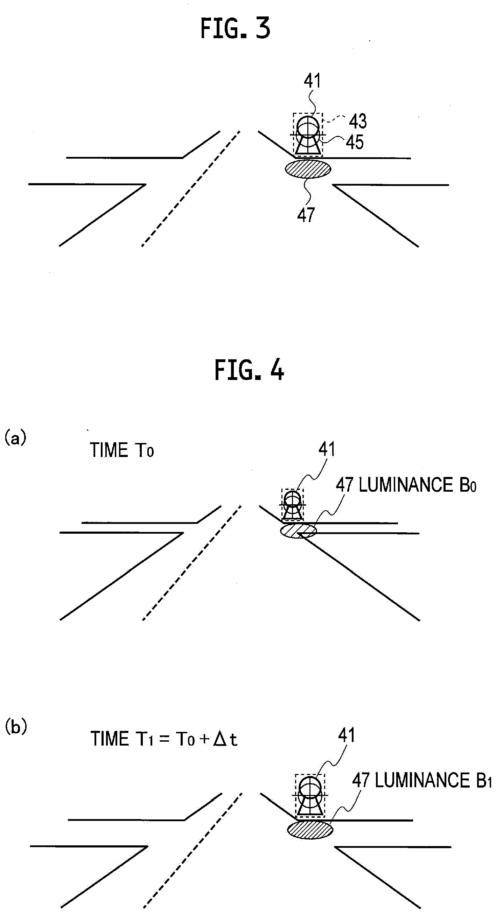

With reference to Fig. 3, a description is given of how to calculate the display position for the attention mark. As shown in Fig. 3, when an attention target 41 is a pedestrian, the display position calculator 23 sets, on an image from the forward camera 31, a rectangular frame 43 surrounding the attention target 41, and sets a base point 45 at the center of the frame 43. The display position calculator 23 calculates a position a predetermined distance away from the base point 45 downwardly and sets this position as the display position of an attention mark 47. When the attention mark 47 is displayed at the display position thus calculated, the attention mark 47 is, from a point of view of the driver, displayed in a superimposed manner close to the attention target 41. Although oval in Fig. 3, the attention mark 47 may be a straight line or other shape such as a triangle, a star, or an arrow. In addition, the frame 43 may be used as the attention mark, or the display position may be set at the base point 45.

The display position calculator 23 corrects the display position of the attention mark when there is a time difference between detection of the attention target and display of the attention mark. For example, the display position of the attention mark is corrected toward the vehicle depending on the length of the time difference. If the vehicle speed of the vehicle is high, the display position of the attention mark is corrected toward the vehicle more.

In Step S60, the display controller 7 calculates a display size of the attention mark. The display size calculator 25 of the display controller 7 calculates the display size in which the attention mark is displayed on the windshield, based on the size of the attention target on the image. In Fig. 3, the display size of the attention mark 47 is set to be slightly wider than a horizontal width of the frame 43 which indicates the size of the attention target 41. Instead, the display size of the attention mark 47 may be set to be as wide as or slightly narrower than the horizontal width of the frame 43.

In Step S70, the display modulator 9 changes the highlight level for highlighted display of the attention mark according to the relative distance. Specifically, the display modulator 9 changes the highlight level such that the luminance of the attention mark increases as the attention target approaches the vehicle, i.e., the relative distance decreases. As shown in Fig. 4(a) for example, at time T0 when the attention target 41 is situated away from the vehicle, i.e., the relative distance is large, the display modulator 9 sets low luminance B0 for the attention mark 47. At time T1 after a lapse of time Δt (T1=T0+Δt), the attention target 41 approaches the vehicle, i.e., the relative distance decreases, as shown in Fig. 4(b). Then, the display modulator 9 changes and sets the luminance of the attention mark 47 to luminance B1 (>B0) by increasing the luminance of the attention mark 47 according to the decrease in the relative distance.

When the luminance of the attention mark is thus changed to increase according to a decrease in the relative distance, the driver's awareness of the attention target can be enhanced according to a rise in the necessity of drawing attention due to the approach of the attention target to the vehicle. On the other hand, when the attention target is situated away from the vehicle, i.e., the necessity of drawing attention is low, the luminance of the attention mark is set low so that the driver may be bothered less.

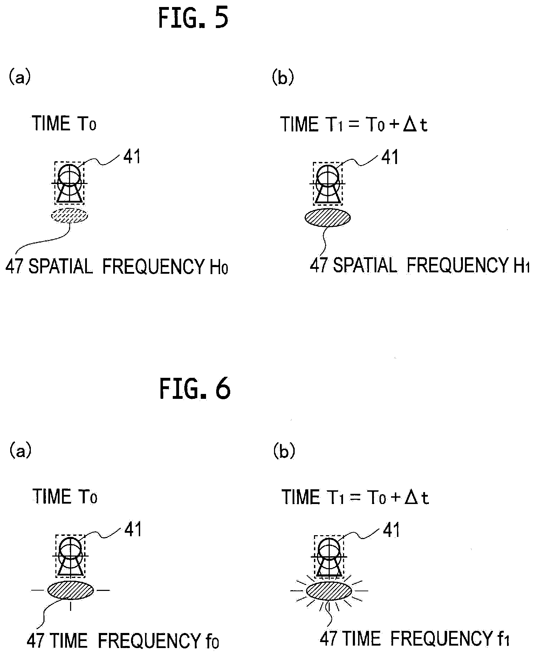

The display modulator 9 may change the spatial frequency, instead of the luminance, of the attention mark. Specifically, the display modulator 9 changes the spatial frequency of the attention mark such that the spatial frequency of the attention mark increases as the attention target approaches the vehicle, i.e., the relative distance decreases. To be more specific, the attention mark is displayed blurrily when the attention target is situated away from the vehicle, i.e., the relative distance is large, and is displayed clearly when the attention target is close to the vehicle, i.e., the relative distance is small. As shown in Fig. 5(a) for example, at time T0, the display modulator 9 sets low spatial frequency H0 for the attention mark 47 to display the attention mark 47 blurrily. Then, as shown in Fig. 5(b), at time T1=T0+Δt, the display modulator 9 changes and sets the spatial frequency of the attention mark 47 to H1 (>H0) by increasing the spatial frequency of the attention mark 47 according to the decrease in the relative distance. The driver's awareness of the attention target can be enhanced by the clear display of the attention mark when the attention target approaches the vehicle, i.e., the necessity of drawing attention rises. On the other hand, when the attention target is situated away from the vehicle, i.e., the necessity of drawing attention is low, the attention mark is displayed blurrily so that the driver may be bothered less.

Alternatively, the display modulator 9 may change the time frequency of the attention mark. Specifically, the display modulator 9 changes the time frequency of the attention mark such that the time frequency of the attention mark increases as the relative distance decreases. To be more specific, the attention mark is displayed with slow blinking when the attention target is situated away from the vehicle, i.e., the relative distance is large, and is displayed with fast blinking when the attention target is close to the vehicle, i.e., the relative distance is small. As shown in Fig. 6(a) for example, at time T0, the display modulator 9 sets low time frequency f0 for the attention mark 47 so that the attention mark 47 may blink slowly. Then, as shown in Fig. 6(b), at time T1=T0+Δt, the display modulator 9 changes and sets the time frequency of the attention mark 47 to f1 (>f0) by increasing the time frequency of the attention mark 47 according to the decrease in the relative distance. The driver's awareness of the attention target can be enhanced by the fast blinking of the attention mark when the attention target approaches the vehicle, i.e., the necessity of drawing attention rises. On the other hand, when the attention target is situated away from the vehicle, i.e., the necessity of drawing attention is low, the attention mark blinks slowly so that the driver may be bothered less.

The attention mark may be changed in one, two, or all of its luminance, spatial frequency, and time frequency according to the relative distance.

In Step S80, the image generator 11 generates an image of the attention mark so that the attention mark may be displayed using the display position, the display size, and the highlighted display mode which have been calculated by the foregoing processing, and outputs the image to the HUD display unit 39. The image generation processing according to the present embodiment thus ends.

Thereafter, the HUD display unit 39 projects the image of the attention mark onto the windshield, so that a virtual image of the attention mark is displayed for the attention target in a superimposed manner.

### [Advantageous Effects of the First Embodiment]

As described above in detail, the vehicular display apparatus 1 according to the present embodiment changes the highlight level for highlighted display of an attention mark according to a relative distance, and thereby enables the driver's awareness of the attention target to be enhanced according to a change of its apparent size when the attention target approaches the vehicle.

In addition, the vehicular display apparatus 1 according to the present embodiment changes the luminance of an attention mark according to a relative distance, and thereby enables the driver to see the attention target easily according to a change of its apparent size when the attention target approaches the vehicle.

Furthermore, the vehicular display apparatus 1 according to the present embodiment changes the spatial frequency of an attention mark according to a relative distance, and thereby enables the driver to see the attention target clearly according to a change of its apparent size when the attention target approaches the vehicle.

In addition, the vehicular display apparatus 1 according to the present embodiment changes the time frequency of an attention mark according to a relative distance, and thereby enables the driver's awareness of the attention target to be enhanced according to a change of its apparent size when the attention target approaches the vehicle.

Furthermore, the vehicular display apparatus 1 according to the present embodiment corrects the display position of an attention mark according to a time difference between detection of an attention target and display of the attention mark, and therefore can display the attention mark at an appropriate position irrespective of the time difference.

### [Second Embodiment]

Next, a vehicular display apparatus according to a second embodiment of the present invention is described with reference to the drawings. The vehicular display apparatus according to the present embodiment has the same configuration as that of the first embodiment, and is therefore not described fully.

The present embodiment differs from the first embodiment in that a display size of an attention mark is changed according to the relative distance. To be more specific, when the display controller 7 calculates the display size of the attention mark in Step S60 of the flowchart in Fig. 2, the display controller 7 changes the display size of the attention mark according to the relative distance. A detailed description for the other steps in the flowchart in Fig. 2 is omitted because the same processing as that in the first embodiment is performed in these steps.

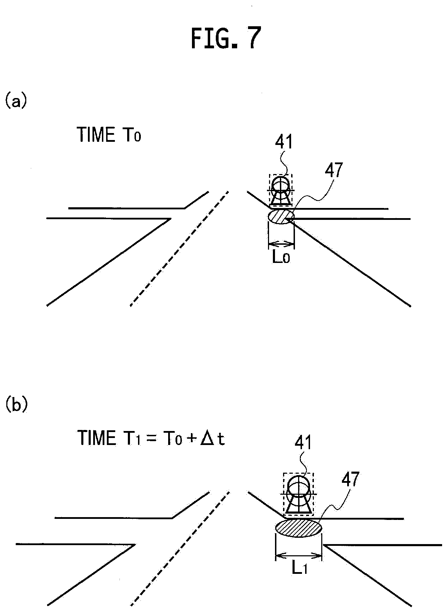

In Step S60, like in the first embodiment described above, the display size calculator 25 of the display controller 7 calculates the display size of the attention mark based on the size of the attention target on the image. Then, the display size calculator 25 changes the calculated display size of the attention mark according to the relative distance. Specifically, the display size calculator 25 changes the display size of the attention mark such that the display size of the attention mark is large as the attention target approaches the vehicle, i.e., the relative distance decrease. As shown in Fig. 7(a) for example, at time T0 when the attention target 41 is situated away from the vehicle, i.e., the relative distance is large, the display size calculator 25 sets small width L0 to the attention mark 47. The width L0 is equal to or smaller than the normal display size calculated based on the size of the attention target. At time T1 after a lapse of time Δt (T1=T0+Δt), the attention target 41 approaches the vehicle, i.e., the relative distance decreases, as shown in Fig. 7(b). Then, the display size calculator 25 changes and sets the width of the attention mark 47 to L1 (>L0) by increasing the width of the attention mark 47 according to the decrease in the relative distance. The width L1 is larger than the normal display size calculated based on the size of the attention target. The driver's awareness of the attention target can be enhanced by displaying the attention mark in a larger size when the attention target approaches the vehicle to raise the necessity of drawing attention. On the other hand, when the attention target is situated away from the vehicle, i.e., the necessity of drawing attention is low, the attention mark is displayed in a small size so that the driver may be bothered less.

Although the horizontal width of the attention mark is changed in the example shown in Fig. 7, the vertical length or the overall size of the attention mark may be changed instead.

### [Advantageous Effects of the Second Embodiment]

As described above in detail, the vehicular display apparatus 1 according to the present embodiment changes the display size of the attention mark according to the relative distance, and thereby enables the driver to see the attention target easily according to a change of its apparent size when the attention target approaches the vehicle.

### REFERENCE SIGNS LIST

- 1: vehicular display apparatus
- 3: attention target detector
- 5: vehicle condition detector
- 7: display controller
- 9: display modulator
- 11: image generator
- 21: coordinate transformer
- 23: display position calculator
- 25: display size calculator
- 31: forward camera
- 33: inter-vehicle distance sensor
- 35: steering angle sensor
- 37: vehicle speed sensor
- 39: HUD display unit

## Claims

1. A vehicular display apparatus (1) that displays an image on a windshield of a vehicle, the apparatus comprising:
an attention target detector (3) configured to detect an attention target to which attention of a driver of the vehicle needs to be drawn, and calculate a distance from the attention target to the vehicle;
a display controller (7) configured to perform display control for displaying an attention mark on the windshield in a superimposed manner such that from a point of view of the driver, the attention mark is displayed close to the attention target detected by the attention target detector (3), the attention mark being displayed to draw the attention of the driver to the attention target; and
a display modulator (9) configured to change, according to the distance, a highlight level for highlighted display of the attention mark, the display control for which is performed by the display controller (7), **characterized in that**
the display controller (7) corrects a display position of the attention mark according to a time difference between detection of the attention target and display of the attention mark, and corrects the display position of the attention mark more if the vehicle speed is high.

2. The vehicular display apparatus (1) according to claim 1, wherein
the display modulator (9) changes luminance of the attention mark according to the distance.

3. The vehicular display apparatus (1) according to claim 1 or 2, wherein
the display modulator (9) displays the attention mark blurrily when the distance is large, and displays the attention mark clearly when the distance is small.

4. The vehicular display apparatus (1) according to any one of claims 1 to 3, wherein
the display modulator (9) displays the attention mark with slow blinking when the distance is large, and displays the attention mark with fast blinking when the distance is small.

5. A vehicular display method performed by a vehicular display apparatus (1) thai displays an image on a windshield of a vehicle, the method comprising:
detecting an attention target to which attention of a driver of the vehicle needs to be drawn, and calculating a distance from the attention target to the vehicle;
performing display control for displaying an attention mark on the windshield in a superimposed manner such that from a point of view of the driver, the attention mark is displayed close to the attention target, the attention mark being displayed to draw the attention of the driver to the attention target;
changing a highlight level for highlighted display of the attention mark according to the distance; **characterized by** correcting a display position of the attention mark according to a time difference between detection of the attention target and display of the attention mark, and
correcting the display position of the attention mark more if the vehicle speed is high.

## Patentansprüche

1. Anzeigevorrichtung (1) für ein Fahrzeug, die ein Bild auf der Windschutzscheibe des Fahrzeugs anzeigt, umfassend:
einen Aufmerksamkeitszieldetektor (3), der dazu ausgebildet ist, ein Aufmerksamkeitsziel, auf das die Aufmerksamkeit des Fahrers des Fahrzeugs gerichtet werden soll, zu erfassen und eine Entfernung zwischen dem Aufmerksamkeitsziel und dem Fahrzeug zu berechnen;
eine Anzeigesteuerung (7), die dazu ausgebildet ist, eine Ansteuerung zur überlagerten Anzeige einer Aufmerksamkeitsmarkierung auf der Windschutzscheibe derart auszuführen, dass aus dem Sichtwinkel des Fahrers die Aufmerksamkeitsmarkierung nahe des von dem Aufmerksamkeitszieldetektor (3) erfassten Aufmerksamkeitsziels angezeigt wird, wobei die Aufmerksamkeitsmarkierung derart angezeigt wird, dass die Aufmerksamkeit des Fahrers auf das Aufmerksamkeitsziel gelenkt wird; und
ein Anzeigemodulator (9), der dazu ausgebildet ist, in Abhängigkeit von der Entfernung den Grad der Hervorhebung für eine optisch hervorgehobene Anzeige der Aufmerksamkeitsmarkierung zu ändern, wobei die Anzeigesteuerung dafür von der Anzeigesteuerung (7) erfolgt,
**dadurch gekennzeichnet, dass**
die Anzeigesteuerung (7) eine Anzeigeposition der Aufmerksamkeitsmarkierung entsprechend einer Zeitdifferenz zwischen der Erfassung des Aufmerksamkeitsziels und der Anzeige der Aufmerksamkeitsmarkierung korrigiert und die Anzeigeposition der Aufmerksamkeitsmarkierung stärker korrigiert, wenn die Fahrzeuggeschwindigkeit hoch ist.

2. Anzeigevorrichtung (1) für ein Fahrzeug gemäß Anspruch 1, wobei der Anzeigemodulator (9) die Helligkeit der Aufmerksamkeitsmarkierung entsprechend der Entfernung ändert.

3. Anzeigevorrichtung (1) für ein Fahrzeug gemäß Anspruch 1 oder 2, wobei der Anzeigemodulator (9) die Aufmerksamkeitsmarkierung verschwommen anzeigt, wenn die Entfernung groß ist, und die Aufmerksamkeitsmarkierung klar anzeigt, wenn die Entfernung gering ist.

4. Anzeigevorrichtung (1) für ein Fahrzeug gemäß einem der Ansprüche 1 bis 3, wobei der Anzeigemodulator (9) die Aufmerksamkeitsmarkierung mit einem langsamen Blinken anzeigt, wenn die Entfernung groß ist, und die Aufmerksamkeitsmarkierung mit einem schnellen Blinken anzeigt, wenn die Entfernung gering ist.

5. Anzeigeverfahren für ein Fahrzeug, das von einer Anzeigevorrichtung (1) für ein Fahrzeug zur Anzeige eines Bilds auf einer Windschutzscheibe eines Fahrzeugs durchgeführt wird, wobei das Verfahren umfasst:
Erfassen eines Aufmerksamkeitsziels, auf das die Aufmerksamkeit des Fahrers des Fahrzeuges gerichtet werden soll und Berechnen einer Entfernung zwischen dem Aufmerksamkeitsziel und dem Fahrzeug;
Durchführen einer Ansteuerung zur überlagerten Anzeige einer Aufmerksamkeitsmarkierung auf der Windschutzscheibe derart, dass aus dem Sichtwinkel des Fahrers die Aufmerksamkeitsmarkierung nahe des von dem Aufmerksamkeitszieldetektor (3) erfassten Aufmerksamkeitsziels angezeigt wird, wobei die Aufmerksamkeitsmarkierung derart angezeigt wird, dass die Aufmerksamkeit des Fahrers auf das Aufmerksamkeitsziel gelenkt wird;
Ändern des Grades der Hervorhebung in Abhängigkeit von der Entfernung für eine optisch hervorgehobene Anzeige der Aufmerksamkeitsmarkierung;
**gekennzeichnet durch**
Korrigieren einer Anzeigeposition der Aufmerksamkeitsmarkierung entsprechend einer Zeitdifferenz zwischen der Erfassung des Aufmerksamkeitsziels und der Anzeige der Aufmerksamkeitsmarkierung und
stärkeres Korrigieren der Anzeigeposition der Aufmerksamkeitsmarkierung, wenn die Fahrzeuggeschwindigkeit hoch ist.

## Revendications

1. Appareil d'affichage pour véhicule (1) qui affiche une image sur le pare-brise d'un véhicule, ledit appareil comprenant :
un détecteur de cible d'attention (3) configuré pour détecter une cible d'attention sur laquelle l'attention d'un conducteur du véhicule doit être attirée, et pour calculer une distance entre la cible d'attention et le véhicule ;
un dispositif de commande d'affichage (7) configuré pour exécuter une commande d'affichage pour afficher un repère d'attention en surimposition sur le pare-brise de telle sorte que, du point de vue du conducteur, le repère d'attention est affiché à proximité de la cible d'attention détectée par le détecteur de cible d'attention (3), le repère d'attention étant affiché pour attirer l'attention du conducteur sur la cible d'attention; et
un modulateur d'affichage (9) configuré pour modifier, en fonction de la distance, un niveau de surbrillance pour l'affichage en surbrillance du repère d'attention pour lequel la commande d'affichage est exécutée par le dispositif de commande d'affichage (7), **caractérisé en ce que**
le dispositif de commande d'affichage (7) corrige une position d'affichage du repère d'attention en fonction d'un décalage temporel entre la détection de la cible d'attention et l'affichage du repère d'attention et corrige la position d'affichage du repère d'attention davantage si la vitesse du véhicule est élevée.

2. Appareil d'affichage pour véhicule (1) selon la revendication 1, dans lequel
le modulateur d'affichage (9) modifie la luminance du repère d'attention en fonction de la distance.

3. Appareil d'affichage pour véhicule (1) selon les revendications 1 ou 2, dans lequel
le modulateur d'affichage (9) affiche le repère d'attention de manière floue lorsque la distance est grande, et affiche le repère d'attention avec une grande netteté lorsque la distance est faible.

4. Appareil d'affichage pour véhicule (1) selon les revendications 1 à 3, dans lequel
le modulateur d'affichage (9) affiche le repère d'attention avec un clignotement lent lorsque la distance est grande, et affiche le repère d'attention avec un clignotement rapide lorsque la distance est faible.

5. Procédé d'affichage pour véhicule réalisé par un appareil d'affichage pour véhicule (1) qui affiche une image sur un pare-brise d'un véhicule, ledit procédé comprenant :
une détection d'une cible d'attention sur laquelle l'attention d'un conducteur du véhicule doit être attirée, et un calcul d'une distance entre la cible d'attention et le véhicule ;
une exécution d'une commande d'affichage destinée à afficher un repère d'attention en surimposition sur le pare-brise de telle sorte que, du point de vue du conducteur, le repère d'attention est affiché à proximité de la cible d'attention, ledit repère d'attention étant affiché pour attirer l'attention du conducteur sur la cible d'attention ;
une modification d'un niveau de surbrillance pour l'affichage en surbrillance du repère d'attention en fonction de la distance ;
**caractérisé par**
une correction d'une position d'affichage du repère d'attention en fonction d'un décalage temporel entre la détection de la cible d'attention et l'affichage du repère d'attention,
la position d'affichage du repère d'attention étant corrigée davantage si la vitesse du véhicule est élevée.
